# EUROPEAN PATENT APPLICATION

(11) **EP 4 807 142 A1**
(43) Date of publication of application: **16.09.2026**
(21) Application number: 26163357.2
(22) Date of filing: 09.03.2026
(51) Int. Cl.: F01D 11/08, F01D 25/24

(54) **PIN-GUIDED SPRING FOR CERAMIC MATRIX COMPOSITE TURBINE COMPONENTS AND METHOD**

(30) Priority: 07.03.2025 US 202519073687
(71) Applicant: RTX Corporation, Farmington, CT 06032 (US)
(72) Inventor: KIM, Russell, Temecula, 92592 (US)
(74) Representative: Dehns

(57) **Abstract**

A pin-guided spring (240) is used for mounting a ceramic matrix composite (CMC) component (210) of a turbine engine, wherein the CMC component having a hot side configured for exposure to a hot gaspath (205) of the turbine engine and an opposing non-gaspath side having a first flange (212) and a second flange (213) extending radially outward therefrom, the first and second flanges each including axial holes (214, 215) disposed therethrough. The pin-guided spring has a first end (352) with first axial holes (460) in registration with the axial holes in the first flange and dimensioned to engage a plurality of pins (220), a second end (354) with second axial holes in registration with the axial holes in the first flange and dimensioned to engage the plurality of pins, and a compressible central section (356) dimensioned for an interference fit between a support and the second flange. The interference fit on the pin-guided spring can protect the CMC component from damage.

## Description

### FIELD OF THE INVENTION

The subject matter disclosed herein relates to supporting ceramic matrix composite (CMC) components of a gas turbine engine and, in particular, to providing an interference-type fit for the CMC component via a pin-guided spring element.

### BACKGROUND OF THE INVENTION

Gas turbine engines or jet engines, in general, include a fan section, a compressor section, a combustion section, and a turbine section. Air enters through the fan section and is compressed in the compressor section before being introduced into the combustion section. In the combustion section, the air is mixed with fuel and ignited to generate a high-energy, high temperature gas flow. The high-energy, high temperature gas flow is expanded in the turbine section which is used to create thrust and to drive the compressor and fan sections.

Certain components of gas turbine engines are thus exposed to the high-energy, high temperature gas flow (i.e., gaspath components). Therefore, it is desirable that such components be made of heat-resistant materials such as ceramic matrix composites (CMCs), which can withstand much higher operating temperatures than components composed of metal alloys. However, assembly loads and sealing are challenging to control with such CMC components where interference fits are traditionally used with metal hardware. Damage to the CMC component and features during assembly and/or over duration of many cycles can occur with interference fits.

To provide support for the CMC components, metal pins may be employed on a non-gaspath side of a CMC component to attach a support member of the CMC component, such as a flange, to a support hardware within the engine enclosure. For example, a CMC component such as a blade outer air seal (BOAS) can be provided with a pair of flanges on the non-gaspath side, and the flanges may include holes to engage support pins that are also attached to associated support hardware.

The above information disclosed in this Background section is only for understanding of the background of the inventive concepts and, therefore, it may contain information that does not constitute prior art.

### SUMMARY OF THE INVENTION

The present disclosure is directed, in a first aspect, to a ceramic matrix composite (CMC) component support system for a CMC component of a turbine engine, the CMC component having a hot side configured for exposure to a hot gaspath of the turbine engine and an opposing non-gaspath side. The system includes a first flange and a second flange extending radially outward from the non-gaspath side of the CMC component, the first and second flanges each including a plurality of axial holes disposed therethrough. The system also includes a first support disposed radially outward from the non-gaspath side of the CMC component and having: a circumferential slot for receiving the first flange, a first end wall configured to be positioned between the first flange and the second flange when the first flange is received in the circumferential slot, a plurality of through holes in the first end wall that extend to the circumferential slot and that are in registration with the plurality of axial holes of the first flange when the first flange is received in the circumferential slot, and a plurality of first blind holes in registration with the plurality of through holes in an opposing side of the circumferential slot. The system additionally includes a second support disposed radially outward from the non-gaspath side of the CMC component and axially-spaced from the first support, the second support including a second end wall having a plurality of second blind holes in registration with the plurality of axial holes of the second flange when the first flange is received in the circumferential slot. A plurality of pins is configured to axially extend from each first blind hole, through a corresponding axial hole of the first flange, through a corresponding through hole of the first end wall, through a corresponding axial hole of the second flange, and into a corresponding second blind hole of the second end wall. A pin-guided spring is disposed between the first end wall and the second flange and includes: a first end configured to contact the first end wall and having a plurality of first axial holes disposed to engage the plurality of pins, a second end configured to contact the second flange and having a plurality of second axial holes disposed to engage the plurality of pins, and a compressed central section dimensioned for an interference fit between the first end wall and the second flange to cause the second flange to contact the second end wall of the second support.

In an embodiment of the system, the first support may be disposed on an upstream side of the CMC component and the second support may be disposed on a downstream side of the CMC component with respect to the gaspath.

In another embodiment of any of the above systems, the first end wall of the first support may include a first retention feature for the pin-guided spring and the pin-guided spring may include a corresponding second retention feature to engage the first retention feature.

In another embodiment of any of the above systems, the first retention feature may be a circumferential recess and the second retention feature may be a circumferential protrusion.

In another embodiment of any of the above systems, the first retention feature and the second retention feature may engage via an interference fit.

In another embodiment of any of the above systems, the pin-guided spring may be formed of metal sheet.

In another embodiment of any of the above systems, the metal sheet may be bent into a cross section and extend circumferentially.

In another embodiment of any of the above systems, the cross section may be substantially "U", "V", "N", "S", "M", or "W"-shaped.

In another embodiment of any of the above systems, a spring rate of the pin-guided spring may be selected to provide a sealing force and/or a loading force between the CMC component and the second support.

The present disclosure is also directed, in a second aspect, to a method of mounting a ceramic matrix composite (CMC) component of a turbine engine, the CMC component having a hot side configured for exposure to a hot gaspath of the turbine engine and an opposing non-gaspath side having a first flange and a second flange extending radially outward therefrom, the first and second flanges each including a plurality of axial holes disposed therethrough. The method includes: disposing a first support radially outward from the non-gaspath side of the CMC component, with the first support including a circumferential slot dimensioned to receive the first flange, a first end wall configured to be positioned between the first flange and the second flange when the first flange is received in the circumferential slot, a plurality of through holes in the first end wall that extend to the circumferential slot that are in registration with the plurality of axial holes of the first flange when the first flange is received in the circumferential slot, and a plurality of first blind holes in registration with the plurality of through holes in an opposing side of the circumferential slot. The method also includes: inserting the first flange of the CMC component into the circumferential slot of the first support; positioning a pin-guided spring between the first end wall of the first support and the second flange of the CMC component, the pin-guided spring including a first end configured to contact the first end wall and having a plurality of first axial holes in registration with the plurality of through holes in the first end wall, a second end configured to contact the second flange and having a plurality of second axial holes in registration with the plurality of axial holes in the second flange, and a compressible central section; inserting a plurality of pins axially through corresponding axial holes of the second flange, through corresponding second axial holes of the pin-guided spring, through corresponding first axial holes of the pin guided spring, through corresponding through holes in the first end wall, through corresponding axial holes of the first flange, and into corresponding first blind holes of the first support; disposing a second support radially outward from the non-gaspath side of the CMC component and axially-spaced from the first support, the second support including a second end wall having a plurality of second blind holes in registration with the plurality of axial holes of the second flange; and axially moving the second support towards the first support to receive the plurality of pins within the plurality of second blind holes, and compress the central section of the pin-guided spring to form an interference fit between the first end wall and the second flange to cause the second flange to contact the second end wall of the second support.

In an embodiment of the method, positioning the pin-guided spring may include engaging a second retention feature of the pin-guided spring with a first retention feature of the first end wall of the first support.

In another embodiment of any of the above methods, the first retention feature may be a circumferential recess and the second retention feature may be a circumferential protrusion.

In a further embodiment of any of the above methods, engaging the first retention feature and the second retention feature may form an interference fit.

The present disclosure is further directed, in a third aspect, to a pin-guided spring for mounting a ceramic matrix composite (CMC) component of a turbine engine, the CMC component having a hot side configured for exposure to a hot gaspath of the turbine engine and an opposing non-gaspath side having a first flange and a second flange extending radially outward therefrom, the first and second flanges each including a plurality of axial holes disposed therethrough. The pin-guided spring includes: a first end having a plurality of first axial holes in registration with the plurality of axial holes in the first flange and dimensioned to engage a plurality of pins, a second end having a plurality of second axial holes in registration with the plurality of axial holes in the first flange and dimensioned to engage the plurality of pins, and a compressible central section dimensioned for an interference fit between a support and the second flange.

In an embodiment of the pin-guided spring, the pin-guided spring may be formed of metal sheet.

In another embodiment of any of the above pin-guided springs, the metal sheet may be bent into a cross section and extends circumferentially.

In another embodiment of any of the above pin-guided springs, the cross section may be substantially "U", "V", "N", "S", "M", or "W"-shaped.

In another embodiment of any of the above pin-guided springs, a spring rate of the pin-guided spring may be selected to provide a sealing force and/or a loading force between the CMC component and the support.

In another embodiment of any of the above pin-guided springs, the pin-guided spring may further include a retention feature on the first end to engage a corresponding retention feature on an adjacent support.

In another embodiment of any of the above pin-guided springs, the retention feature may be a circumferential protrusion and the corresponding retention feature may be a circumferential recess dimensioned for an interference fit with the circumferential protrusion.

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
FIG. 1 schematically illustrates a partial cross section of an exemplary gas turbine engine;
FIG. 2 schematically illustrates a cross sectional view of a first example embodiment of pin-guided spring arrangement in accordance with the present disclosure;
FIG. 3 schematically illustrates an end view of a spring element of the first example embodiment in accordance with the present disclosure;
FIG. 4 schematically illustrates a perspective view of the spring element of the first example embodiment in accordance with the present disclosure;
FIG. 5A schematically illustrates cross section of a "U" shaped spring element in accordance with the present disclosure;
FIG. 5B schematically illustrates cross section of an "N" shaped spring element in accordance with the present disclosure;
FIG. 5C schematically illustrates cross section of an "M" shaped spring element in accordance with the present disclosure;
FIG. 5D schematically illustrates cross section of a "V" shaped spring element in accordance with the present disclosure;
FIG. 5E schematically illustrates cross section of a sideways "S" shaped spring element in accordance with the present disclosure;
FIG. 5F schematically illustrates cross section of a sideways "3" or "W" shaped spring element in accordance with the present disclosure; and
FIG. 6 is a flow diagram of an example process in accordance with the present disclosure.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art.

The following discussion omits or only briefly describes conventional features of the disclosed technology that are apparent to those skilled in the art. Reference to a particular embodiment does not limit the scope of the claims attached hereto. Additionally, any examples set forth in this specification are intended to be non-limiting and merely set forth some of the many possible embodiments for the appended claims. Further, particular features described herein can be used in combination with other described features in each of the various possible combinations and permutations. A person of ordinary skill in the art would know how to use the instant invention, in combination with routine experiments, to achieve other outcomes not specifically disclosed in the examples or the embodiments.

Unless otherwise specifically defined herein, all terms are to be given their broadest possible interpretation including meanings implied from the specification as well as meanings understood by those skilled in the art and/or as defined in dictionaries, treatises, etc. Unless defined otherwise, all technical and scientific terms used herein have the same meaning as commonly understood by one of ordinary skill in the art in the field of the disclosed technology. It must also be noted that, as used in the specification and the appended claims, the singular forms "a," "an," and "the" include plural referents unless otherwise specified, and that the terms "includes" and/or "including," when used in this specification, specify the presence of stated features, elements, and/or components, but do not preclude the presence or addition of one or more other features, steps, operations, elements, components, and/or groups thereof. Additionally, methods, equipment, and materials similar or equivalent to those described herein can also be used in the practice or testing of the disclosed technology.

The devices of the present disclosure may be understood more readily by reference to the following detailed description of the embodiments taken in connection with the accompanying drawing figures, which form a part of this disclosure. It is to be understood that this application is not limited to the specific devices, methods, conditions or parameters described and/or shown herein, and that the terminology used herein is for the purpose of describing particular embodiments by way of example only and is not intended to be limiting. All spatial references, such as, for example, proximal, distal, horizontal, vertical, top, upper, lower, bottom, left and right, are for illustrative purposes only and can be varied within the scope of the disclosure. For example, the references "upper" and "lower" are relative and used only in the context to the other, and are not necessarily "superior" and "inferior."

It will further be understood that, although the terms "first," "second," "third," and the like may be used herein to describe various elements, these elements should not be limited by these terms. These terms are only used to distinguish one element from another element. Thus, "a first element" discussed below could be termed "a second element" or "a third element," and "a second element" and "a third element" may be termed likewise without departing from the teachings herein.

Various examples of the disclosed technology are provided throughout this disclosure. The use of these examples is illustrative only, and in no way limits the scope and meaning of the invention or of any exemplified form. Likewise, the invention is not limited to any particular preferred embodiment(s) described herein. Indeed, modifications and variations of the invention may be apparent to those skilled in the art upon reading this specification, and can be made without departing from its spirit and scope. The invention is therefore to be limited only by the terms of the claims, along with the full scope of equivalents to which the claims are entitled.

The present disclosure is directed to a pin-guided spring used for mounting CMC components. The pin-guided spring transfers the traditional interference fit of the CMC component to the more compliant pin-guided spring to avoid CMC component damage during assembly and operation. The pin-guided spring can apply sufficient load to ensure that the CMC component will engage with adjacent hardware to provide sealing and/or load transfer.

While the illustrated examples and discussion below often make reference to a blade outer air seal (BOAS, which may refer to BOAS segments), it should be recognized that the present disclosure is not limited to BOAS but includes any CMC gaspath component which may be mounted to support structures via pins, for example, combustion liners and vane platforms.

Further, as used herein, the term "pin" includes straight, cylindrical bars often referred to as pins as well as similar mounting hardware having non-cylindrical cross-sections or hook-shaped elements having straight sections that permit a slidable mounting surface.

In the discussion below, axial refers to a direction that coincides with the longitudinal axis of the engine. Radial refers to a direction that is radial with respect to the longitudinal axis of the engine. Circumferential refers to a direction that corresponds to the circumference of a circle around the longitudinal axis of the engine. The leading edge/portion of a structure is the edge/portion that faces into the flow of the hot gases, i.e., faces upstream. The trailing edge/portion of a structure is the edge/portion that the faces away from the flow of the hot gases, i.e., faces downstream.

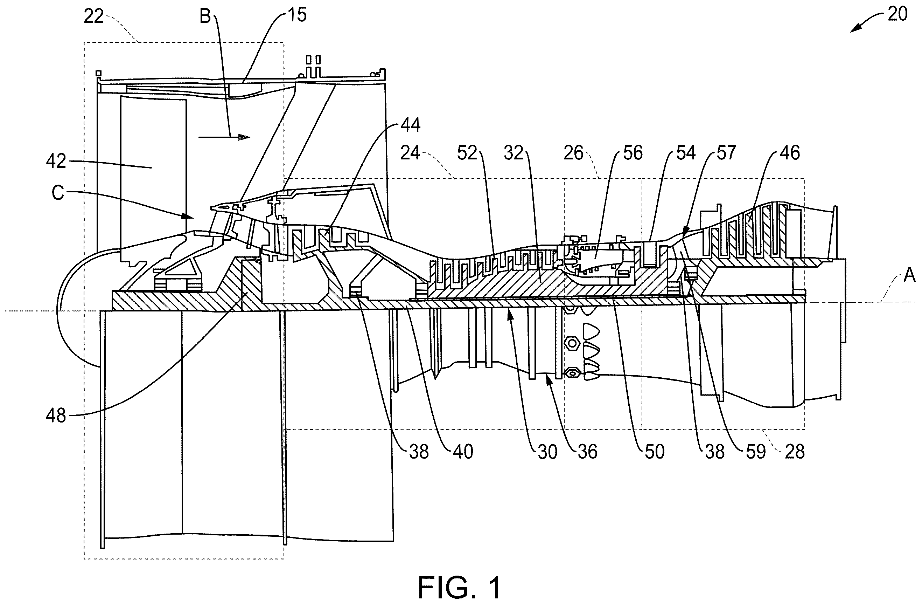

FIG. 1 schematically illustrates an example of a gas turbine engine 20 (i.e., a two-spool turbofan) which includes a fan section 22, a compressor section 24, a combustor section 26, and a turbine section 28. Fan section 22 drives air along a bypass flow path B in a bypass duct defined within a housing 15, and also along a core flow path C for compression in compressor section 24, with subsequent introduction into combustor section 26, followed by expansion through turbine section 28. Although FIG. 1 depicts a two-spool turbofan gas turbine engine, it should be understood that the concepts described herein are not limited to use with two-spool turbofans engines and may be applied to other types of turbine engines.

Engine 20 generally includes a low speed spool 30 and a high-speed spool 32 mounted for rotation about an engine central longitudinal axis A, relative to an engine static structure 36, via several bearing systems 38. Various bearing systems 38 at various locations may alternatively or additionally be provided. The location of bearing systems 38 may be varied as appropriate to the application.

The low speed spool 30 generally includes an inner shaft 40 that interconnects, a first (or low) pressure compressor 44 and a first (or low) pressure turbine 46. Inner shaft 40 is connected to fan 42 through a speed change mechanism, which in this exemplary embodiment is illustrated as a geared structure 48 to drive fan 42 at a lower speed than the low speed spool 30. High speed spool 32 includes an outer shaft 50 that interconnects a second (or high) pressure compressor 52 and a second (or high) pressure turbine 54. Combustor 56 is positioned between high pressure compressor 52 and high-pressure turbine 54. A mid-turbine frame 57 of the engine static structure 36 may be arranged generally between the high-pressure turbine 54 and the low-pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core air flow is first compressed by low pressure compressor 44, and then by the high-pressure compressor 52. Thereafter, the core air flow is mixed and burned with fuel in combustor 56, then expanded in high pressure turbine 54 and low-pressure turbine 46. The mid-turbine frame 57 includes airfoils 59 which are in the core airflow path C. The turbines 46 and 54 rotationally drive the respective low speed spool 30 and high-speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low-pressure compressor, or aft of the combustor section 26 or even aft of turbine section 28, and fan 42 may be positioned forward or aft of the location of gear system 48.

The turbine section 28 includes at least one rotor and at least one blade extending radially outwardly from the rotor. The turbine section 28 may further include a blade outer air seal(s) (BOAS(s)). The blade outer air seal can be an assembly of a plurality of BOAS segments that together form an annular shaped shroud around the engine's central longitudinal axis A which is positioned between an outer casing of the engine and the turbine blade(s) of the turbine section.

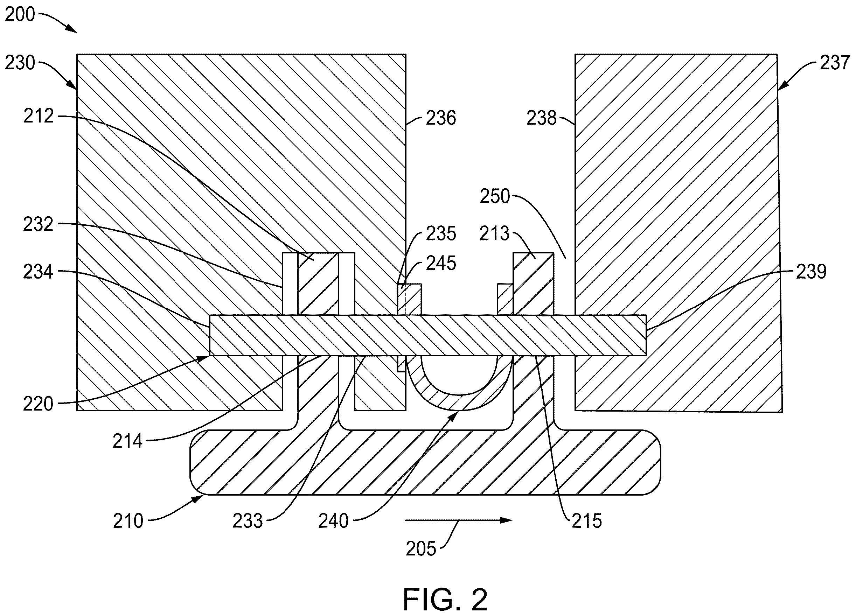

With reference to FIG. 2, a schematic cross section of an example embodiment of a CMC component mounting arrangement 200 is illustrated. Mounting arrangement 200 provides an interference-type fit for a CMC component 210 of a turbine engine via a pin-guided spring element 240. The elements are not illustrated to scale and clearances of various components are also not illustrated for clarity of explanation.

Mounting arrangement 200 provides a CMC component support system for a CMC component 210 of a turbine engine (see FIG. 1). The CMC component 210, shown in FIG. 2 as a blade outer air seal (BOAS, sometimes referred to as a blade shroud) has a hot side configured for exposure to a hot gaspath 205 of the turbine engine and an opposing non-gaspath side.

A first flange 212 and a second flange 213 extend radially outward from the non-gaspath side of the CMC component 210. The first flange 212 and the second flange 213 are illustrated schematically in FIG. 2, and on an actual CMC component 210 may include more complex shapes and designs. The first flange 212 and second flange 213 each include a plurality of axial holes 214 and 215 disposed therethrough. While only a single axial hole 214 and 215 is shown in the cross section of FIG. 2, at least one additional axial hole 214 and 215 is included in each of the first flange 212 and second flange 213 at another circumferential cross section thereof.

Mounting arrangement 200 includes a first support 230 disposed radially outward from the non-gaspath side of the CMC component 210. The first support 230 is typically formed of metal and disposed within a housing of the turbine engine. The first support 230 includes a circumferential slot 232 that is dimensioned for receiving the first flange 212. The first support 230 further includes a first end wall 236 on a downstream side that is configured to be positioned between the first flange 212 and the second flange 213 when the first flange 212 is received in the circumferential slot 232.

The first support 230 also includes a plurality of through holes 233 in the first end wall 236 that extend to the circumferential slot 232 and that are in registration with the plurality of axial holes 214 of the first flange 212 when the first flange 212 is received in the circumferential slot 232. The first support 230 has formed therein a plurality of first blind holes 234 in registration with the plurality of through holes 233 in the first wall 236 on the opposing side of the circumferential slot 232. Again, while only a single through hole 233 and first blind hole 234 is shown in the cross section of FIG. 2, at least one additional through hole 233 and first blind hole 234 is included in the first support at another circumferential cross section thereof.

Mounting arrangement 200 further includes a second support 237 disposed radially outward from the non-gaspath side of the CMC component 210 and axially-spaced from the first support 230. The second support 237 includes a second end wall 238 having a plurality of second blind holes 239 in registration with the plurality of axial holes 215 of the second flange 213 when the first flange 212 is received in the circumferential slot 232. While only a single second hole 239 is shown in the cross section of FIG. 2, at least one additional second blind hole 239 is included in the second support at another circumferential cross section thereof.

The CMC component 210 is attached to the first support 230 and second support 237 via a plurality of pins 220 configured to axially extend from each first blind hole 234, through a corresponding axial hole 214 of the first flange 212, through a corresponding through hole 233 of the first end wall 236, through a corresponding axial hole 215 of the second flange 213, and into a corresponding second blind hole 239 of the second end wall 238. While only a single pin 220 is shown in the cross section of FIG. 2, at least one additional pin 220 is included in mounting arrangement 200 at another circumferential cross section thereof.

In accordance with the present disclosure, a pin-guided spring 240 is disposed between the first end wall 236 and the second flange 213. The pin-guided spring 240 in this embodiment has a generally "U"-shaped cross section, but embodiments of the present disclosure are not limited thereto. The pin-guided spring 240 transfers the traditional interference fit of the CMC component 210 to the more compliant pin-guided spring 240 to avoid damage to CMC component 210 during assembly and operation. The pin-guided spring 240 can apply sufficient load to ensure that the CMC component 210 will move to close gap 250 and engage with adjacent hardware of second support 237 to provide sealing and/or load transfer.

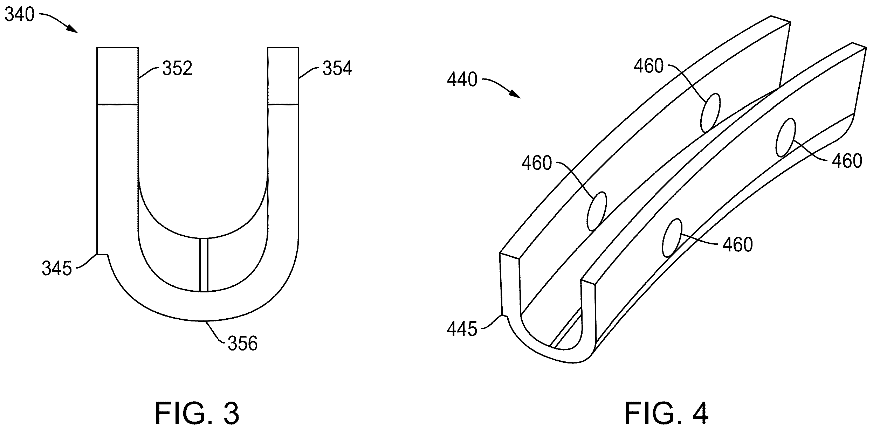

The pin-guided spring 240 includes a first end (see 352 of FIG. 3) configured to contact the first end wall 236 and having a plurality of first axial holes (see 460 of FIG. 4) disposed to engage the plurality of pins 220. The pin-guided spring 240 also includes a second end (see 354 of FIG. 3) configured to contact the second flange 213 and having a plurality of second axial holes (see 460 of FIG. 4) disposed to engage the plurality of pins 220. The pin-guided spring 240 further includes a compressed or compressible central section (see 356 of FIG. 3) dimensioned for an interference fit between the first end wall 236 and the second flange 213 to cause the second flange 213 to close gap 250 and contact the second end wall 238 of the second support 237.

As shown in the embodiment of arrangement 200, the first support 230 may be disposed on an upstream side of the CMC component 210 and the second support 237 may be disposed on a downstream side of the CMC component 210 with respect to the gaspath 205.

As further shown in the embodiment of arrangement 200, the first end wall 236 of the first support 230 may include a first retention feature 235 for the pin-guided spring 240 and the pin-guided spring 240 may include a corresponding second retention feature 245 to engage the first retention feature 235.

For example, as illustrated in FIG. 2, the first retention feature 235 may be a circumferential recess and the second retention feature 245 may be a circumferential protrusion (see, also, 345 of FIG. 3 and 445 of FIG. 4). In one or more embodiments of the present disclosure, the first retention feature 235 and the second retention feature 245 may engage via an interference fit. For example, both the first support 230 and the pin-guided spring 240 may be made of a metal with a suitable modulus of elasticity to permit such an interference fit without plastic damage of the retention features 235, 245.

With reference to FIG. 3, an end view of a generally "U"-shaped pin-guided spring element 340 is illustrated that corresponds to the pin-guided spring 240 of the first example embodiment of FIG. 2. With reference to FIG. 4, a perspective view the generally "U"-shaped pin-guided spring element 440 is illustrated that corresponds to the pin-guided spring 240 of the first example embodiment of FIG. 2 and the pin-guided spring 340 of FIG. 3.

With reference to FIGS. 3 and 4, the pin-guided spring 340, 440 includes a first end 352 configured to contact the first end wall (see 236 of FIG. 2) and having a plurality of first axial holes 460 disposed to engage the plurality of pins (see 220 of FIG. 2). The pin-guided spring 340, 440 also includes a second end 354 configured to contact the second flange (see 213 of FIG. 2) and having a plurality of second axial holes 460 disposed to engage the plurality of pins (see 220 of FIG. 2). The pin-guided spring 340, 440 further includes a compressed or compressible central section 356 dimensioned for an interference fit between the first end wall (236 of FIG. 2) and the second flange (213 of FIG. 2) to cause the second flange to contact the second end wall (238 of the second support 237 in FIG. 2).

As illustrated in FIGS. 3 and 4, pin-guided spring 340, 440 may include a retention feature 345, 445 such as a protrusion for engaging a corresponding recess in a first support in an interference fit to aid in placement of the pin-guided spring 340, 440 during assembly.

Pin-guided spring 340, 440 may be formed of a metal sheet that has been bent or otherwise shaped or assembled to form the profile of the pin-guided spring 340, 440. When formed of metal sheet, retention feature 345, 445 may be formed by welding or brazing an additional strip of metal sheet to form a protrusion. As illustrated in FIG. 4, the pin-guided spring 440 bent into a cross section and extend circumferentially by including an inner and outer radius that essentially matches a radius of the CMC component that it is used with.

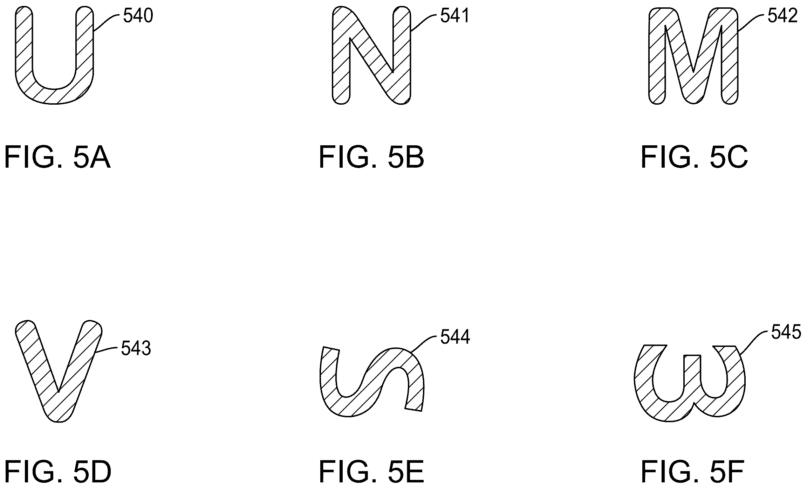

Although pin-guided springs 240, 340, and 440 of FIGS. 2-4 have a generally "U"-shaped cross sectional profile, embodiments in accordance with the present disclosure are not limited thereto. For example, FIG. 5A schematically illustrates a cross section of a "U"-shaped pin-guided spring 540 in accordance with the present disclosure, FIG. 5B schematically illustrates a cross section of an "N"-shaped pin-guided spring 541 in accordance with the present disclosure, FIG. 5C schematically illustrates cross section of an "M"-shaped pin-guided spring 542 in accordance with the present disclosure, FIG. 5D schematically illustrates a cross section of a "V"-shaped pin-guided spring 543 in accordance with the present disclosure, FIG. 5E schematically illustrates a cross section of a sideways "S"-shaped pin-guided spring 544 in accordance with the present disclosure, and FIG. 5F schematically illustrates a cross section of a sideways "3" or "W"-shaped pin-guided spring 545 in accordance with the present disclosure. Indeed, a cross section may be selected based upon multiple variables, including cost and packaging requirements.

Thus, a pin-guided spring in accordance with the present disclosure may be used for mounting a CMC component of a turbine engine, wherein the CMC component has a hot side configured for exposure to a hot gaspath of the turbine engine and an opposing non-gaspath side having a first flange and a second flange extending radially outward therefrom, the first and second flanges each including a plurality of axial holes disposed therethrough. Such a pin-guided spring includes a first end having a plurality of first axial holes in registration with the plurality of axial holes in the first flange and dimensioned to engage a plurality of pins, a second end having a plurality of second axial holes in registration with the plurality of axial holes in the first flange and dimensioned to engage the plurality of pins, and a compressible central section dimensioned for an interference fit between a support and the second flange.

In an embodiment, such a pin-guided spring may be formed of metal sheet. In various embodiments, the metal sheet may be bent into a cross section and extend circumferentially. In additional embodiments of the pin-guided spring, the cross section may be substantially "U", "V", "N", "S", "M", or "W"-shaped.

Regardless of the cross section used for a pin-guided spring in accordance with the present invention, a spring rate of the pin-guided spring may be selected to provide a sealing force and/or a loading force between the CMC component and the second support.

One or more embodiments of the pin-guided spring may further include a retention feature on the first end to engage a corresponding retention feature on an adjacent support. In various embodiments, the retention feature may be a circumferential protrusion and the corresponding retention feature may a circumferential recess dimensioned for an interference fit with the circumferential protrusion.

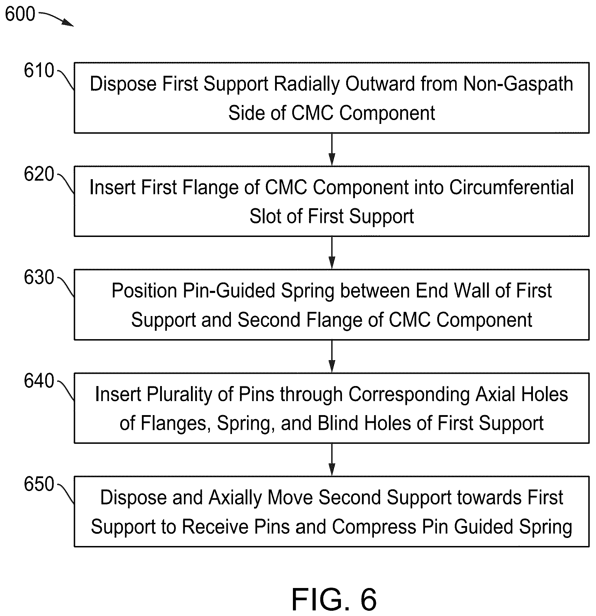

With reference to FIG. 6, a flow diagram of an example method 600 in accordance with the present disclosure is illustrated.

The method 600 relates to mounting a CMC component of a turbine engine, wherein the CMC component has a hot side configured for exposure to a hot gaspath of the turbine engine and an opposing non-gaspath side having a first flange and a second flange extending radially outward therefrom, the first and second flanges each including a plurality of axial holes disposed therethrough.

The method 600 includes a first step 610 of disposing a first support radially outward from the non-gaspath side of the CMC component. In an embodiment, the first support includes: a circumferential slot dimensioned to receive the first flange, a first end wall configured to be positioned between the first flange and the second flange when the first flange is received in the circumferential slot, a plurality of through holes in the first end wall that extend to the circumferential slot that are in registration with the plurality of axial holes of the first flange when the first flange is received in the circumferential slot, and a plurality of first blind holes in registration with the plurality of through holes in an opposing side of the circumferential slot.

Method 600 continues with a step 620 of inserting the first flange of the CMC component into the circumferential slot of the first support.

In a next step 630, a pin-guided spring is positioned between the first end wall of the first support and the second flange of the CMC component. In an embodiment, the pin-guided spring includes: a first end configured to contact the first end wall and having a plurality of first axial holes in registration with the plurality of through holes in the first end wall, a second end configured to contact the second flange and having a plurality of second axial holes in registration with the plurality of axial holes in the second flange, and a compressible central section.

In an embodiment, the positioning of the pin-guided spring in step 630 may include engaging a second retention feature of the pin-guided spring with a first retention feature of the first end wall of the first support. In one or more embodiments, the first retention feature may be a circumferential recess and the second retention feature may be a circumferential protrusion. In further embodiments, engaging the first retention feature and the second retention feature may form an interference fit.

Step 640 of method 600 includes inserting a plurality of pins axially through corresponding axial holes of the second flange, through corresponding second axial holes of the pin-guided spring, through corresponding first axial holes of the pin guided spring, through corresponding through holes in the first end wall, through corresponding axial holes of the first flange, and into corresponding first blind holes of the first support. As understood by one of skill in the art, the pins and associated holes may be shaped and sized to permit axial translation (i.e., sliding) of the pin and/or pin-guided spring. Although round holes and pins are described herein, embodiments are not limited thereto, and numerous other shapes may be used without departing from the present disclosure.

A final step or steps 650 include disposing a second support radially outward from the non-gaspath side of the CMC component and axially-spaced from the first support, and axially moving the second support towards the first support to receive the pins and compress the pin-guided spring. In an embodiment, the second support includes a second end wall having a plurality of second blind holes in registration with the plurality of axial holes of the second flange, and axially moving the second support towards the first support allows the second support to receive the plurality of pins within the plurality of second blind holes, and compress the central section of the pin-guided spring to form an interference fit between the first end wall and the second flange to cause the second flange to contact the second end wall of the second support.

With respect to fabrication of the pin-guided spring of the present disclosure, materials may include sheet metal, wrought, and cold rolled material including, but not limited to AMS 5879, AMS 5914, AMS 5950, AMS 5704-5709, AMS 5715, AMS 5754, AMS 5798, and the like. The holes of the pin-guided spring may be oversized relative to the pin to allow freedom of movement, thermal expansion, and account for various loading conditions of the spring. Contact surfaces may be machined for greater control and engagement with surrounding hardware. Various elements (pins, springs) may be segments if they are expected to display varying displacements relative to one another. In certain applications, bushings and other similar structures may be used to reduce wear on the pins.

In addition to the various fabrication methods disclosed herein, embodiments of the present disclosure may use various other fabrication methods such as casting, stamping, machining, sacrificial plies, etc. without departing from the scope of the present disclosure.

Embodiments in accordance with the present disclosure may be applied to any CMC component that utilizes pins for support, and may provide greater control over system level interactions for assembly and operation.

Additionally, embodiments in accordance with the present disclosure transfer a traditional interference feature of supporting CMC components to a compliant metal spring component to avoid CMC component damage while still ensuring engagement of the CMC component for sealing and/or loading requirements.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope and spirit of the present disclosure.

## Claims

1. A ceramic matrix composite (CMC) component support system for a CMC component of a turbine engine, the CMC component (210) having a hot side configured for exposure to a hot gaspath (205) of the turbine engine and an opposing non-gaspath side, comprising:
a first flange (212) and a second flange (213) extending radially outward from the non-gaspath side of the CMC component, the first and second flanges each including a plurality of axial holes (214, 215) disposed therethrough;
a first support (230) disposed radially outward from the non-gaspath side of the CMC component and having:
a circumferential slot (232) for receiving the first flange,
a first end wall (236) configured to be positioned between the first flange and the second flange when the first flange is received in the circumferential slot,
a plurality of through holes (233) in the first end wall that extend to the circumferential slot and that are in registration with the plurality of axial holes of the first flange when the first flange is received in the circumferential slot, and
a plurality of first blind holes (234) in registration with the plurality of through holes in an opposing side of the circumferential slot;
a second support (237) disposed radially outward from the non-gaspath side of the CMC component and axially-spaced from the first support, the second support including a second end wall (238) having a plurality of second blind holes (239) in registration with the plurality of axial holes of the second flange when the first flange is received in the circumferential slot;
a plurality of pins (220) configured to axially extend from each first blind hole, through a corresponding axial hole of the first flange, through a corresponding through hole of the first end wall, through a corresponding axial hole of the second flange, and into a corresponding second blind hole of the second end wall; and
a pin-guided spring (240) disposed between the first end wall and the second flange, the pin-guided spring including:
a first end (352) configured to contact the first end wall and having a plurality of first axial holes (460) disposed to engage the plurality of pins,
a second end (354) configured to contact the second flange and having a plurality of second axial holes (460) disposed to engage the plurality of pins, and
a compressed central section (356) dimensioned for an interference fit between the first end wall and the second flange to cause the second flange to contact the second end wall of the second support.

2. The CMC component support system of claim 1, wherein the first support is disposed on an upstream side of the CMC component and the second support is disposed on a downstream side of the CMC component with respect to the gaspath.

3. The CMC component support system of claim 1 or 2, wherein the first end wall of the first support includes a first retention feature (235) for the pin-guided spring and the pin-guided spring includes a corresponding second retention feature (245) to engage the first retention feature.

4. The CMC component support system of claim 3, wherein the first retention feature is a circumferential recess and the second retention feature is a circumferential protrusion.

5. The CMC component support system of claim 3 or 4, wherein the first retention feature and the second retention feature engage via an interference fit.

6. The CMC component support system of any preceding claim, wherein the pin-guided spring is formed of metal sheet.

7. The CMC component support system of claim 6, wherein the metal sheet is bent into a cross section and extends circumferentially.

8. The CMC component support system of claim 7, wherein the cross section is substantially "U", "V", "N", "S", "M", or "W"-shaped.

9. The CMC component support system of any preceding claim, wherein a spring rate of the pin-guided spring is selected to provide a sealing force and/or a loading force between the CMC component and the second support.

10. A method of mounting a ceramic matrix composite (CMC) component (210) of a turbine engine, the CMC component having a hot side configured for exposure to a hot gaspath (205) of the turbine engine and an opposing non-gaspath side having a first flange (212) and a second flange (213) extending radially outward therefrom, the first and second flanges each including a plurality of axial holes (214, 215) disposed therethrough, the method comprising:
disposing a first support (230) radially outward from the non-gaspath side of the CMC component, the first support including:
a circumferential slot (232) dimensioned to receive the first flange,
a first end wall (236) configured to be positioned between the first flange and the second flange when the first flange is received in the circumferential slot,
a plurality of through holes (233) in the first end wall that extend to the circumferential slot that are in registration with the plurality of axial holes of the first flange when the first flange is received in the circumferential slot, and
a plurality of first blind holes (234) in registration with the plurality of through holes in an opposing side of the circumferential slot;
inserting the first flange of the CMC component into the circumferential slot of the first support;
positioning a pin-guided spring (240) between the first end wall of the first support and the second flange of the CMC component, the pin-guided spring including:
a first end (352) configured to contact the first end wall and having a plurality of first axial holes (460) in registration with the plurality of through holes in the first end wall,
a second end (354) configured to contact the second flange and having a plurality of second axial holes (460) in registration with the plurality of axial holes in the second flange, and
a compressible central section (356);
inserting a plurality of pins (220) axially through corresponding axial holes of the second flange, through corresponding second axial holes of the pin-guided spring, through corresponding first axial holes of the pin guided spring, through corresponding through holes in the first end wall, through corresponding axial holes of the first flange, and into corresponding first blind holes of the first support;
disposing a second support (237) radially outward from the non-gaspath side of the CMC component and axially-spaced from the first support, the second support including a second end wall (238) having a plurality of second blind holes (239) in registration with the plurality of axial holes of the second flange; and
axially moving the second support towards the first support to:
receive the plurality of pins within the plurality of second blind holes, and
compress the central section of the pin-guided spring to form an interference fit between the first end wall and the second flange to cause the second flange to contact the second end wall of the second support.

11. The method of claim 10, wherein positioning the pin-guided spring includes engaging a second retention feature (245) of the pin-guided spring with a first retention feature (235) of the first end wall of the first support.

12. The method of claim 11, wherein:
the first retention feature is a circumferential recess and the second retention feature is a circumferential protrusion; and/or
wherein engaging the first retention feature and the second retention feature forms an interference fit.

13. A pin-guided spring (240) for mounting a ceramic matrix composite (CMC) component (210) of a turbine engine, the CMC component having a hot side configured for exposure to a hot gaspath of the turbine engine and an opposing non-gaspath side having a first flange and a second flange extending radially outward therefrom, the first and second flanges each including a plurality of axial holes disposed therethrough, the pin-guided spring comprising:
a first end (352) having a plurality of first axial holes (460) in registration with the plurality of axial holes in the first flange and dimensioned to engage a plurality of pins (220),
a second end (354) having a plurality of second axial holes (460) in registration with the plurality of axial holes in the first flange and dimensioned to engage the plurality of pins, and
a compressible central section (356) dimensioned for an interference fit between a support and the second flange,
wherein, optionally, the pin-guided spring is formed of metal sheet,
wherein, further optionally, the metal sheet is bent into a cross section and extends circumferentially,
wherein, further optionally, the cross section is substantially "U", "V", "N", "S", "M", or "W"-shaped.

14. The pin-guided spring of claim 13, wherein a spring rate of the pin-guided spring is selected to provide a sealing force and/or a loading force between the CMC component and the support.

15. The pin-guided spring of claim 13 or 14, further including a retention feature on the first end to engage a corresponding retention feature on an adjacent support,
wherein, optionally, the retention feature is a circumferential protrusion and the corresponding retention feature is a circumferential recess dimensioned for an interference fit with the circumferential protrusion.
